# EUROPÄISCHE PATENTSCHRIFT

(11) **EP 4 520 009 B1**
(45) Veröffentlichungstag und Bekanntmachung des Hinweises auf die Patenterteilung: **10.06.2026**
(21) Anmeldenummer: 23718651.5
(22) Anmeldetag: 14.04.2023
(51) Int. Cl.: H04L 9/40, G06F 21/64, H04L 67/12, H04W 4/40, H04W 12/106, H04W 4/46

(54) **VERFAHREN ZUM ZUMINDEST TEILWEISEN VERARBEITEN EINES DATENSATZES, COMPUTERPROGRAMMPRODUKT, EMPFÄNGERFAHRZEUG, SOWIE SYSTEM**
METHOD FOR AT LEAST PARTLY PROCESSING A DATA SET, COMPUTER PROGRAM PRODUCT, RECEIVER VEHICLE, AND SYSTEM
PROCÉDÉ POUR LE TRAITEMENT AU MOINS PARTIEL D'UN ENSEMBLE DE DONNÉES, PRODUIT DE PROGRAMME INFORMATIQUE, VÉHICULE RÉCEPTEUR ET SYSTÈME

(30) Priorität: 03.05.2022 DE 102022204363
(43) Veröffentlichungstag der Anmeldung: 12.03.2025
(73) Patentinhaber: VOLKSWAGEN AKTIENGESELLSCHAFT, 38440 Wolfsburg (DE)
(72) Erfinder: MEIER, Andreas, 38364 Schöningen (DE)
(86) Internationale Anmeldenummer: PCT/EP2023/059746
(87) Internationale Veröffentlichungsnummer: WO 2023/213512

(56) Entgegenhaltungen:
- DE-A1- 102019 122 669
- US-A1- 2020 068 365
- US-A1- 2020 081 999

## Beschreibung

Die Erfindung betrifft ein Verfahren zum zumindest teilweisen Verarbeiten eines Datensatzes, ein Computerprogrammprodukt, ein Empfängerfahrzeug, sowie ein System.

Fahrzeuge werden häufig mit einer Vielzahl an Daten versorgt. Dabei kann es vorkommen, dass größere Datensätze in Form von Datenpaketen versendet werden sollen. Beispielsweise ist es bekannt, sog. Over-the-Air-Softwareupdates für Fahrzeuge einzusetzen. Dabei erfolgt die Übertragung über das Mobilfunknetz, wobei mehrere Gigabytes an Daten übertragen werden. Da bei einer größeren Fahrzeugflotte sehr viele Fahrzeuge diese Updates bekommen, erfolgt das Ausrollen dieser Updates üblicherweise in Wellen, um eine Netzwerkbelastung für das jeweilige Rechenzentrum zu verringern. Mit steigender Anzahl an Fahrzeugen der Fahrzeugflotte kann dies jedoch zu einem stark verzögerten Roll-Out führen. Alternativ müsste die Netzwerkkapazität der Anbindung des Rechenzentrums stark erhöht werden, was je nach Skalierung der Fahrzeugflotte hohe Kosten verursachen kann.

Aus der DE 10 2019 122 669 A1 ist es bekannt, Update-Dateien in kleineren Teilen zu verteilen, so dass sich diese Teile unter den fahrenden Fahrzeugen ausbreiten können. Allerdings besteht insbesondere bei einem Bezug von Daten der Fahrzeuge untereinander ein Interesse daran, dass die Quellen vertrauenswürdig sind, um nicht manipulierte Daten zu übertragen.

Weiterer Stand der Technik ist die US-Patentanmeldung US2020/081999.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung bei einer, insbesondere in Hinblick auf große Datensätze, verbesserten Datenverteilung eine Sicherheit für ein Empfängerfahrzeug beim Datenempfang und/oder bei der Datenverarbeitung zu verbessern.

Die voranstehende Aufgabe wird gelöst durch ein Verfahren mit den Merkmalen des Anspruchs 1, ein Computerprogrammprodukt mit den Merkmalen des Anspruchs 13, ein Empfängerfahrzeug mit den Merkmalen des Anspruchs 14, sowie ein System mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogrammprodukt, dem erfindungsgemäßen Empfängerfahrzeug und/oder dem erfindungsgemäßen System und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung ist ein Verfahren zum zumindest teilweisen Verarbeiten eines Datensatzes mit mehreren Datensegmenten bei einem Empfängerfahrzeug vorgesehen. Das Verfahren umfasst, insbesondere in Form von Verfahrensschritten:
- Erkennen zumindest eines fehlenden ersten Datensegmentes des Datensatzes durch das Empfängerfahrzeug,
- Erhalt von Sicherheitsdaten zumindest zu dem ersten Datensegment des Datensatzes durch das Empfängerfahrzeug von einer Datenquelle,
- Auffinden zumindest eines Senderfahrzeugs zur Bereitstellung des ersten Datensegmentes, insbesondere durch das Empfängerfahrzeug,
- Erhalt des ersten Datensegmentes durch das Empfängerfahrzeug von dem Senderfahrzeug,
- Überprüfen einer Freigabefähigkeit des ersten Datensegmentes in Abhängigkeit von den Sicherheitsdaten, insbesondere durch das Empfängerfahrzeug,
- Verarbeiten des ersten Datensegmentes durch das Empfängerfahrzeug in Abhängigkeit von der Freigabefähigkeit.

Bei dem Empfängerfahrzeug und/oder dem Senderfahrzeug handelt es sich vorzugsweise um Kraftfahrzeuge, insbesondere in Form von Elektrofahrzeugen. Zusätzlich oder alternativ ist jedoch ebenso denkbar, dass das Empfängerfahrzeug und/oder das Senderfahrzeug als Luftfahrzeug ausgebildet ist. Vorzugsweise befindet sich das Empfängerfahrzeug und/oder das Senderfahrzeug beim Ausführen des Verfahrens in einem Betriebsmodus zur bestimmungsgemäßen Verwendung. Das Verfahren kann insbesondere während eines Betreibens des Empfängerfahrzeugs und/oder des Senderfahrzeugs ausgeführt werden. Beispielsweise kann das Empfängerfahrzeug und/oder das Senderfahrzeug in dem Betriebsmodus durch einen Nutzer im Straßenverkehr betrieben werden. Vorzugsweise kann vorgesehen sein, dass die Datenquelle einen Server zum Bereitstellen des Datensatzes umfasst.

Der Datensatz kann beispielsweise ein Softwareupdate, insbesondere in Form von Installationsdaten zum Aktualisieren einer Fahrzeugsoftware des Empfängerfahrzeugs, umfassen. Die Datensegmente sind insbesondere als Datenpakete und/oder Teile des Datensatzes ausgestaltet. Beispielsweise können die Datensegmente jeweils eine oder mehrere Dateien umfassen. Es ist denkbar, dass die Datensegmente beim Verarbeiten des ersten Datensegmentes zusammengefügt werden und/oder nacheinander ausgeführt werden.

Es kann vorgesehen sein, dass das Empfängerfahrzeug, insbesondere zu Beginn des Verfahrens, bereits mehrere Datensegmente des Datensatzes abgespeichert hat und/oder, insbesondere von der Datenquelle und/oder anderen Senderfahrzeugen erhält. Insbesondere ist es denkbar, dass die restlichen Datensegmente beim Erkennen des fehlenden ersten Datensegmentes bereits im Empfängerfahrzeug vorhanden sind. Zum Erkennen des fehlenden ersten Datensegmentes kann beispielsweise durch das Empfängerfahrzeug analysiert werden, welches der Datensegmente des Datensatzes noch nicht im Empfängerfahrzeug vorhanden ist.

Die Sicherheitsdaten können Daten zur Herkunft, zur Zusammensetzung und/oder zum Verhalten des ersten Datensegmentes umfassen. Bei der Datenquelle kann es sich vorzugsweise um eine zertifizierte und/oder im Empfängerfahrzeug vordefinierte Datenquelle handeln. Beispielsweise kann im Empfängerfahrzeug, insbesondere werkseitig, die Adresse, insbesondere in Form einer Internet-Adresse, abgespeichert sein. Zum Erhalt der Sicherheitsdaten durch das Empfängerfahrzeug können die Sicherheitsdaten von der Datenquelle aktiv und/oder passiv bereitgestellt werden. So ist es denkbar, dass die Datenquelle die Sicherheitsdaten aktiv zusendet und/oder das Empfängerfahrzeug die Sicherheitsdaten, beispielsweise periodisch und/oder ausgelöst durch ein Ereignis, anfordert.

Das Auffinden des Senderfahrzeugs kann zufällig oder geplant erfolgen. Beispielsweise kann das Senderfahrzeug ein Fahrzeug sein, welches sich innerhalb eines vorbestimmten Abstandes zum Empfängerfahrzeug befindet und/oder dem Empfängerfahrzeug im Straßenverkehr begegnet. Dabei kann das Auffinden des Senderfahrzeugs zur Bereitstellung des ersten Datensegmentes autonom durch das Empfängerfahrzeug erfolgen. Es ist jedoch ebenso denkbar, dass das Auffinden des Senderfahrzeugs zur Bereitstellung des ersten Datensegmentes in Abhängigkeit von der Datenquelle und/oder einer Benutzereingabe erfolgt.

Zum Erhalt des ersten Datensegmentes durch das Empfängerfahrzeug kann das erste Datensegment von dem Senderfahrzeug aktiv und/oder passiv bereitgestellt werden. So ist es denkbar, dass das Senderfahrzeug das erste Datensegment aktiv zusendet und/oder das Empfängerfahrzeug das erste Datensegment, beispielsweise periodisch und/oder ausgelöst durch ein Ereignis, wie z. B. die Begegnung mit dem Senderfahrzeug und/oder das Erkennen des fehlenden ersten Datensegmentes, anfordert.

Es kann vorgesehen sein, dass das erste Datensegment nach dem Erhalt des ersten Datensegmentes zum Überprüfen der Freigabefähigkeit in Abhängigkeit von den Sicherheitsdaten analysiert wird. Beim Verarbeiten des ersten Datensegmentes kann das erste Datensegment beispielsweise mit weiteren Datensegmenten zum Datensatz kombiniert und/oder ausgeführt werden. Es ist denkbar, dass die Sicherheitsdaten Sicherheitsinformationen zu dem Datenpaket umfassen. Dabei kann eine (weitere) Sicherheitsüberprüfung des Datenpaketes durch das Empfängerfahrzeug in Abhängigkeit von den Sicherheitsdaten nach dem Verarbeiten des ersten Datensegmentes erfolgen.

Somit ist die Datenquelle vorzugsweise eine vertrauenswürdige Datenquelle, von welcher die Sicherheitsdaten bezogen werden. Dadurch, dass das Empfängerfahrzeug die Sicherheitsdaten von der Datenquelle erhält, kann bei der Überprüfung der Freigabefähigkeit insbesondere erkannt werden, ob das erste Datensegment manipuliert und/oder fehlerhaft ist. Beispielsweise ist es insbesondere nicht erforderlich, dass das Senderfahrzeug, welches das erste Datensegment bereitstellt, selbst zertifiziert ist. Somit kann das Senderfahrzeug als Verteiler für das erste Datensegment dienen. Dazu kann das Senderfahrzeug das erste Datensegment über die Datenquelle erhalten, um das erste Datensegment an andere Fahrzeuge, wie das Empfängerfahrzeug, weiterzuverteilen. Dadurch kann die Datenquelle, insbesondere mittels einer vergleichsweise geringen Netzwerkkapazität, die Verbreitung des Datensatzes auch bei großen Datenmengen, wie z. B. 50 GB oder mehr, und einer hohen Fahrzeugzahl effizient durchführen und/oder initiieren. Insbesondere können somit mehrere Datensegmente von dem Empfängerfahrzeug von unterschiedlichen Senderfahrzeugen erhalten werden.

Gleichzeitig bieten die Sicherheitsdaten eine Möglichkeit, die Kommunikation der Senderfahrzeuge und des Empfängerfahrzeugs abzusichern und eine Verbreitung und/oder Verarbeitung von manipulierten Daten, wie z. B. Schadcode, durch das Empfängerfahrzeug zu vermeiden. Folglich kann verhindert werden, dass Originalsegmente der Datensegmente des Datensatzes so verändert werden, dass sie Schadsoftware enthalten, um z. B. Computerviren, Ransomware oder Trojaner in der Fahrzeugsoftware des Empfängerfahrzeugs zu integrieren. Folglich kann durch die Sicherheitsdaten und die Überprüfung der Freigabefähigkeit insbesondere für einen großflächigen Angriff auf die IT-Sicherheit von Fahrzeugen verhindert werden.

Ferner kann bei einem erfindungsgemäßen Verfahren vorteilhafterweise vorgesehen sein, dass die Sicherheitsdaten eine externe Sicherheitsinformation über eine Zusammensetzung des ersten Datensegmentes umfassen, insbesondere wobei zum Überprüfen der Freigabefähigkeit eine interne Sicherheitsinformation über die Zusammensetzung des ersten Datensegmentes, insbesondere durch das Empfängerfahrzeug, erzeugt und mit der externen Sicherheitsinformation verglichen wird. Vorzugsweise handelt es sich bei der internen und/oder externen Sicherheitsinformation jeweils um einen, insbesondere kryptografischen, Hash-Wert.

Somit kann durch die externe Sicherheitsinformation eine Zusammensetzung eines, insbesondere von der Datenquelle bereitgestellten, Originalsegmentes des ersten Datensegmentes abgebildet sein. Durch die interne Sicherheitsinformation kann die Zusammensetzung des ersten Datensegmentes abgebildet werden, welches das Empfängerfahrzeug von dem Senderfahrzeug erhält. Durch die Abbildung als Hash-Wert kann z. B. sogar festgestellt werden, ob das erste Datensegment in einzelnen Bits verändert wurde. Dadurch kann selbst bei sehr ähnlichen Daten in einfacher Art und Weise überprüft werden, ob das erste Datensegment dem Originalsegment entspricht.

Ferner kann bei einem erfindungsgemäßen Verfahren vorteilhafterweise vorgesehen sein, dass beim Erkennen des fehlenden ersten Datensegmentes Bereitstellungsdaten von der Datenquelle erhalten werden, insbesondere wobei die Bereitstellungsdaten eine Unterteilung des Datensatzes in die mehreren Datensegmente umfassen. Die Bereitstellungsdaten können durch das Empfängerfahrzeug periodisch, z. B. täglich, von der Datenquelle abgefragt werden und/oder von der Datenquelle an das Empfängerfahrzeug in Abhängigkeit von einem Ereignis, wie z. B. der Verfügbarkeit eines neuen Updates, gesendet werden. Die Bereitstellungsdaten können beispielsweise mit den Sicherheitsdaten gemeinsam von der Datenquelle erhalten werden. Die Bereitstellungsdaten können die Information, z. B. in Form einer Liste, umfassen, wieviele und/oder welche Datensegmente der Datensatz umfasst. Weiterhin können die Bereitstellungsdaten weitere Informationen über den Datensatz, wie z. B. einen Changelog und/oder eine Versionsnummer, umfassen. Ferner kann dem Empfängerfahrzeug durch die Bereitstellungsdaten mitgeteilt werden, dass der Datensatz bereitgestellt wird oder wurde. Beispielsweise kann das Empfängerfahrzeug somit durch die Bereitstellungsdaten darüber informiert werden, dass ein Update verfügbar ist, und welche Datensegmente es zum Verarbeiten des Updates benötigt. Es kann vorgesehen sein, dass das Auffinden des Senderfahrzeugs in Abhängigkeit von den Bereitstellungsdaten erfolgt. Somit stellen die Bereitstellungsdaten ein weiteres Sicherheitsmerkmal dar, da dadurch durch das Empfängerfahrzeug insbesondere nur in Abhängigkeit von der Datenquelle Datensegmente vom Senderfahrzeug erhalten werden.

Weiterhin ist es bei einem erfindungsgemäßen Verfahren denkbar, dass, insbesondere durch das Empfängerfahrzeug, eine Zuordnung des ersten Datensegmentes zu dem Senderfahrzeug umfasst, wobei das Auffinden des Senderfahrzeugs in Abhängigkeit von der Zuordnung erfolgt. Beispielsweise können die Bereitstellungsdaten die Zuordnung umfassen. Somit können die Bereitstellungsdaten, insbesondere zusätzlich zum ersten Datensegment, eine Information über das Senderfahrzeug umfassen. Beispielsweise kann die Zuordnung des ersten Datensegmentes zu dem Senderfahrzeug eine Position und/oder eine Identifikation des Senderfahrzeugs, z. B in Form einer VIN, einer SSID und/oder einer MAC-Adresse, umfassen.

Ferner können die Bereitstellungsdaten eine Information umfassen, ob das Senderfahrzeug mehrere Datensegmente des Datensatzes bereitstellt. Dadurch kann das Auffinden durch die Datenquelle gesteuert sein. Es kann vorgesehen sein, dass das Empfängerfahrzeug zum Erhalt des ersten Datensegmentes nur solche Senderfahrzeuge abfragt, über welche eine Zuordnung des ersten Datensegmentes zu dem jeweiligen Senderfahrzeug vorliegt. Somit kann das Auffinden des Senderfahrzeugs für das Empfängerfahrzeug durch die Zuordnung erleichtert sein und gleichzeitig eine Absicherung erfolgen, dass das Senderfahrzeug zur Bereitstellung des ersten Datensegments von der Datenquelle ausgewiesen ist. Zum Auffinden des Senderfahrzeugs kann durch das Senderfahrzeug ferner eine Liste mit allen fehlenden Datensegmenten des Datensatzes an die Datenquelle gesendet werden.

Weiterhin ist es bei einem erfindungsgemäßen Verfahren denkbar, dass die Bereitstellungsdaten eine Gruppierung mehrerer Senderfahrzeuge zur Bereitstellung des Datensatzes umfassen, insbesondere wobei jedem der Senderfahrzeuge der Gruppierung zumindest ein weiteres Datensegment des Datensatzes zum Erhalt durch das Empfängerfahrzeug zugordnet ist, um die weiteren Datensegmente der Gruppierung zu dem Datensatz zusammenzuführen. Es ist jedoch ebenso denkbar, dass das erste Datensegment von jedem der Senderfahrzeuge der Gruppierung beziehbar ist. Insbesondere können die Datensegmente zumindest teilweise redundant innerhalb der Gruppierung verteilt sein. Dabei kann das Senderfahrzeug und/oder das Empfängerfahrzeug der Gruppierung, insbesondere durch die Datenquelle, zugeordnet sein. Somit kann vorgesehen sein, dass die Gruppierung derart gebildet ist, dass der Gruppierung insgesamt der gesamte Datensatz zur Verfügung steht, die Mitglieder der Gruppierung jedoch die Datensegmente untereinander austauschen, um den Datensatz jeweils vollständig verarbeiten zu können. Durch die Gruppierung können die Datensegmente effizient ausgetauscht werden. Die Einteilung von Fahrzeugen in Gruppierungen kann vorzugsweise fest, d.h. dass ein Fahrzeug ist immer derselben Gruppierung zugeordnet ist, oder dynamisch, z. B. in Abhängigkeit von einem Ereignis, gebildet werden. Ferner ist es denkbar, dass eine zufällige Zuordnung von Fahrzeugen zu einer Gruppierung, oder ein Berechnen der Gruppenzugehörigkeit, z. B. anhand der VINs, erfolgt. Es ist denkbar, dass die Gruppierung als abgeschlossene Gruppierung gebildet ist, bei welcher Mitglieder der Gruppierung nur untereinander Datensegmente übermitteln können. Eine Liste der Mitglieder der abgeschlossenen Gruppierung kann beispielsweise bei der Datenquelle hinterlegt sein. Dadurch kann beispielsweise ein Fuhrpark eines Unternehmens gegen äußere Einflüsse abgesichert und/oder mit individuellen Datensätzen versorgt werden.

Im Rahmen der Erfindung ist es weiterhin denkbar, dass zum Erhalt der Bereitstellungsdaten eine, insbesondere geografische, Positionsinformation zum Bestimmen der Gruppierung, insbesondere durch das Empfängerfahrzeug, an die Datenquelle gesendet wird. Die Positionsinformation kann beispielsweise Positionsdaten einer Geoposition, z. B. GPS-Daten und/oder Galileo-Daten, umfassen. Somit kann die Gruppierung durch die Datenquelle vorteilhafterweise anhand der Positionsinformation sowie anhand von Positionsinformationen von Senderfahrzeugen gebildet sein. Insbesondere kann die Gruppierung somit eine geografische Gruppierung sein, um eine geografische Nähe zwischen dem Empfängerfahrzeug und dem Senderfahrzeug auszunutzen und den Datensatz möglichst effizient unter den Mitgliedern der Gruppierung zu verteilen. Weiterhin können Fahrzeugparameter, insbesondere in Form von Geschwindigkeitsdaten und/oder Routendaten einer geplanten Route, des Empfängerfahrzeugs zum Bestimmen der Gruppierung an die Datenquelle gesendet werden. Dadurch kann durch die Datenquelle eine stabile Gruppierung und/oder eine Redundanz der übermittelten Datensegmente innerhalb der Gruppierung definiert werden.

Im Rahmen der Erfindung ist es weiterhin denkbar, dass das Verfahren einen Erhalt eines zweiten Datensegmentes des Datensatzes, vorzugsweise von der Datenquelle und/oder durch das Empfängerfahrzeug, umfasst, wobei das zweite Datensegment mit dem ersten Datensegment verarbeitet wird. Es kann vorgesehen sein, dass das zweite Datensegment vor der Verarbeitung in Abhängigkeit von den Sicherheitsdaten überprüft wird. Das zweite Datensegment kann insbesondere vor dem ersten Datensegment erhalten werden. Beispielsweise kann anhand des zweiten Datensegmentes und der Bereitstellungsdaten das erste Datensegment als fehlend erkannt werden. Somit ist es denkbar, dass der Erhalt des Datensatzes zum Teil von der Datenquelle selbst oder einem anderen Datenbestand erfolgt und zum Teil von dem Senderfahrzeug. Dadurch kann somit ein verteilter Erhalt des Datensatzes durch das Empfängerfahrzeug realisiert sein.

Ferner kann bei einem erfindungsgemäßen Verfahren vorteilhafterweise vorgesehen sein, dass durch das Empfängerfahrzeug das erste Datensegment und/oder das zweite Datensegment, insbesondere für das Senderfahrzeug und/oder die Senderfahrzeuge der Gruppierung, bereitgestellt wird. Ferner ist es denkbar, dass weitere Datensegmente des Datensatzes durch das Empfängerfahrzeug bereitgestellt werden. Somit kann das Empfängerfahrzeug, selbst und/oder insbesondere jedes Mitglied der Gruppierung als Senderfahrzeug fungieren, wenn es die Datensegmente bereitstellt. Dadurch kann eine effiziente Verteilung des Datensatzes erreicht werden. Gleichzeitig können die Bereitstellungsdaten über das Empfängerfahrzeug durch die Datenquelle bereitgestellt werden. Vorzugsweise sendet das Empfängerfahrzeug eine Empfangsbestätigung über den Erhalt des ersten und/oder zweiten Datensegmentes an die Datenquelle, um sich als Senderfahrzeug bei der Datenquelle zu registrieren.

Es ist ferner bei einem erfindungsgemäßen Verfahren denkbar, dass beim Auffinden des Senderfahrzeugs, vorzugsweise durch das Empfängerfahrzeug, eine Vertrauensprüfung des Senderfahrzeugs, insbesondere in Abhängigkeit von den Sicherheitsdaten und/oder von den Bereitstellungsdaten, erfolgt. Durch die Vertrauensprüfung kann die Kommunikation zwischen dem Senderfahrzeug und dem Empfängerfahrzeug schon vor dem Erhalt des ersten Datensegmentes abgesichert werden. Beispielsweise kann bei der Vertrauensprüfung überprüft werden, ob das Senderfahrzeug ein zertifiziertes Fahrzeug ist und/oder ob das Senderfahrzeug Teil der Gruppierung ist.

Weiterhin ist es bei einem erfindungsgemäßen Verfahren denkbar, dass die Bereitstellungsdaten und/oder die Sicherheitsdaten Ausschlussdaten zur Identifikation von kritischen Senderfahrzeugen umfassen, insbesondere wobei die Vertrauensprüfung und/oder das Überprüfen der Freigabefähigkeit in Abhängigkeit von den Ausschlussdaten erfolgt. Ferner ist es denkbar, dass das Auffinden des Senderfahrzeugs in Abhängigkeit von den Ausschlussdaten erfolgt. Die Ausschlussdaten können beispielsweise eine Ausschlussliste umfassen, welche die kritischen Senderfahrzeuge als solche ausweist. Dabei kann vorgesehen sein, dass von den kritischen Senderfahrzeugen der Erhalt des ersten Datensegmentes und/oder die Freigabefähigkeit eines von einem kritischen Senderfahrzeug erhaltenen Datensegmentes durch das Empfängerfahrzeug verweigert wird. Ferner kann das Senderfahrzeug für die Vertrauensprüfung einen privaten und einen öffentlichen Schlüssel aufweisen. Dabei kann beispielsweise eine asymmetrische, verschlüsselte Verbindung zwischen dem Senderfahrzeug und dem Empfängerfahrzeug aufgebaut werden, worüber das erste Datensegment übertragen wird und wofür die privaten und öffentlichen Schlüssel zum Einsatz kommen. Dabei können das Sender- und Empfängerfahrzeug an das jeweils andere auch sein öffentliches Zertifikat mitteilen, um eine verschlüsselte Verbindung zu initiieren. Dieses Zertifikat kann von jedem Fahrzeug geprüft werden, nämlich einerseits ob dieses Zertifikat sich aus einem zentral ausgestellten Root-Zertifikat ableitet und andererseits, ob das Zertifikat eventuell für ungültig erklärt worden ist. Sollte das Zertifikat nicht vertrauenswürdig ausgestellt worden sein oder mit Hilfe der Datenquelle erkannt werden, dass das Zertifikat für ungültig erklärt wurde, wird vorzugsweise eine weitere Datenübertragung zwischen dem Sender- und Empfängerfahrzeug durch das Empfängerfahrzeug verhindert.

Weiterhin ist es bei einem erfindungsgemäßen Verfahren denkbar, dass das Empfängerfahrzeug zur Kommunikation mit dem Senderfahrzeug und/oder der Datenquelle über eine drahtlose Netzwerkverbindung und/oder eine Mobilfunkverbindung ausgebildet ist. Vorzugsweise kann das Empfängerfahrzeug zumindest eine Kommunikationsschnittstelle für die Kommunikation mit dem Senderfahrzeug und/oder der Datenquelle umfassen. Es ist jedoch ebenso denkbar, dass die Kommunikation zwischen dem Empfängerfahrzeug und dem Senderfahrzeug über eine andere Kommunikationsschnittstelle des Empfängerfahrzeugs erfolgt, als die Kommunikation mit der Datenquelle. Beispielsweise kann die Kommunikationsschnittstelle zur Datenkommunikation mit dem Senderfahrzeug über WLAN ausgebildet sein. Vorzugsweise kann der Erhalt der Sicherheitsdaten und/oder der Erhalt des ersten Datensegmentes über die drahtlose Netzwerkverbindung und/oder die Mobilfunkverbindung des Empfängerfahrzeuges erfolgen. Weiterhin ist es denkbar, dass das Empfängerfahrzeug zur Kommunikation mit dem Senderfahrzeug und/oder der Datenquelle über eine 5G-Kommunikation erfolgt. Dabei kann ausgenutzt werden, dass der 5G-Funk sowohl eine direkte Kommunikation von Teilnehmern untereinander, als auch über eine zentrale Stelle des Mobilfunknetzes ermöglicht.

Ferner kann bei einem erfindungsgemäßen Verfahren vorteilhafterweise vorgesehen sein, dass die Sicherheitsdaten von mehreren Datenquellen empfangen werden, wobei die Sicherheitsdaten von unterschiedlichen Datenquellen zur Verifikation der Sicherheitsdaten miteinander verglichen werden. Dadurch kann vermieden werden, dass eine der Datenquellen einen sog. Single-Point-of-Failure bildet. Durch die Mehrzahl an Datenquellen kann folglich ein Ausfall einer der Datenquellen kompensiert werden. Es ist denkbar, dass die Sicherheitsdaten in einem Distributed-Ledger-System, z. B. in Form einer Blockchain, abgespeichert sind. Die Datenquellen können somit mehrere verteilt gelegene Server umfassen. Es ist jedoch ebenso denkbar, dass die Datenquellen Fahrzeuge umfassen. Beispielsweise kann eine interne Sicherheitsinformation, z. B. in Form eines Hash-Wertes, anhand des ersten Datensegmentes erzeugt werden. Anschließend kann vorgesehen sein, dass, z. B. innerhalb eines vorbestimmten Zeitraums, externe Sicherheitsinformationen, insbesondere in Form von Hash-Werten, von mehreren Senderfahrzeugen bezogen werden, die jeweils mit der internen Sicherheitsinformation verglichen werden. Beim Überprüfen der Freigabefähigkeit kann dann überprüft werden, ob eine vorgegebene Anzahl an mit der internen Sicherheitsinformation übereinstimmenden externen Sicherheitsinformationen erreicht wurde. Dadurch kann zur verbesserten Sicherheit ein Konsens innerhalb der Fahrzeuge erreicht werden, insbesondere ohne, dass eine Abfrage eines Servers erforderlich ist.

Gemäß einem weiteren Aspekt der Erfindung ist ein Computerprogrammprodukt vorgesehen. Das Computerprogrammprodukt umfasst Befehle, die bei einer Ausführung durch eine Kontrolleinheit die Kontrolleinheit veranlassen, ein erfindungsgemäßes Verfahren auszuführen.

Somit bringt ein erfindungsgemäßes Computerprogrammprodukt die gleichen Vorteile mit sich, wie sie bereits ausführlich mit Bezug auf ein erfindungsgemäßes Verfahren beschrieben worden sind. Bei dem Verfahren kann es sich insbesondere um ein computerimplementiertes Verfahren handeln. Das Computerprogrammprodukt kann als computerlesbarer Anweisungscode implementiert sein. Ferner kann das Computerprogrammprodukt auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein. Ferner kann das Computerprogrammprodukt in einem Netzwerk wie beispielsweise dem Internet bereitstellbar oder bereitgestellt sein, von dem es bei Bedarf von einem Nutzer heruntergeladen oder online ausgeführt werden kann. Das Computerprogrammprodukt kann sowohl mittels einer Software, als auch mittels einer oder mehrerer spezieller elektronischer Schaltungen, d.h. in Hardware oder in beliebig hybrider Form, d.h. mittels Software-Komponenten und Hardware-Komponenten, realisiert sein.

Gemäß einem weiteren Aspekt der Erfindung ist ein Empfängerfahrzeug vorgesehen. Das Empfängerfahrzeug weist zumindest eine Kommunikationseinheit zur Kommunikation mit einer Datenquelle und zumindest einem Senderfahrzeug auf. Ferner umfasst das Empfängerfahrzeug eine Kontrolleinheit zum Ausführen eines erfindungsgemäßen Verfahrens.

Somit bringt ein erfindungsgemäßes Empfängerfahrzeug die gleichen Vorteile mit sich, wie sie bereits ausführlich mit Bezug auf ein erfindungsgemäßes Verfahren und/oder ein erfindungsgemäßes Computerprogrammprodukt beschrieben worden sind. Die Kommunikationseinheit kann vorzugsweise zur Kommunikation über eine WLAN-Verbindung und/oder eine Mobilfunkverbindung ausgebildet sein.

Gemäß einem weiteren Aspekt der Erfindung ist ein System vorgesehen. Das System weist eine Datenquelle und ein Senderfahrzeug auf. Ferner umfasst das System ein erfindungsgemäßes Empfängerfahrzeug.

Somit bringt ein erfindungsgemäßes System die gleichen Vorteile mit sich, wie sie bereits ausführlich mit Bezug auf ein erfindungsgemäßes Verfahren, ein erfindungsgemäßes Computerprogrammprodukt und/oder ein erfindungsgemäßes Empfängerfahrzeug beschrieben worden sind. Es ist denkbar, dass das System mehrere Senderfahrzeuge, insbesondere einer Gruppierung, umfasst. Die Datenquelle kann vorzugsweise als Server ausgestaltet sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1: ein erfindungsgemäßes Verfahren in schematischer Darstellung von Verfahrensschritten in einem ersten Ausführungsbeispiel,
- Figur 2: ein erfindungsgemäßes System zum Ausführen des Verfahrens mit einem erfindungsgemäßen Empfängerfahrzeug,
- Figur 3: das System beim Überprüfen der Freigabefähigkeit, und
- Figur 4: ein erfindungsgemäßes Verfahren in schematischer Darstellung von Verfahrensschritten in einem weiteren Ausführungsbeispiel.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

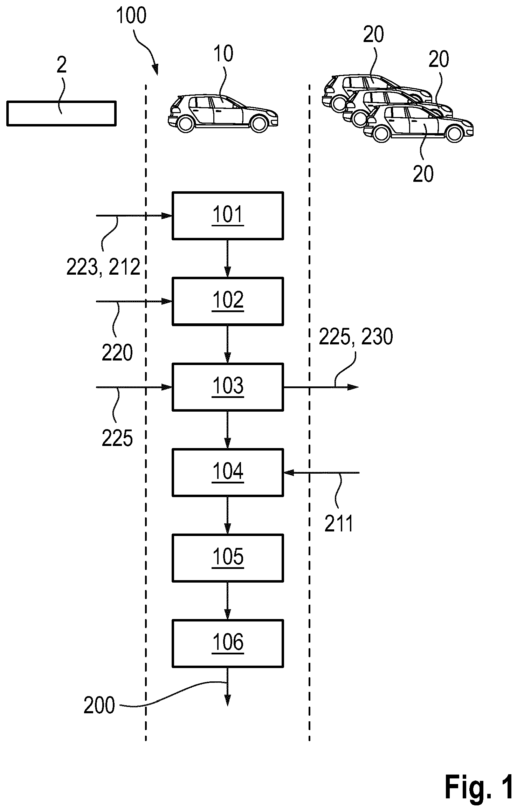

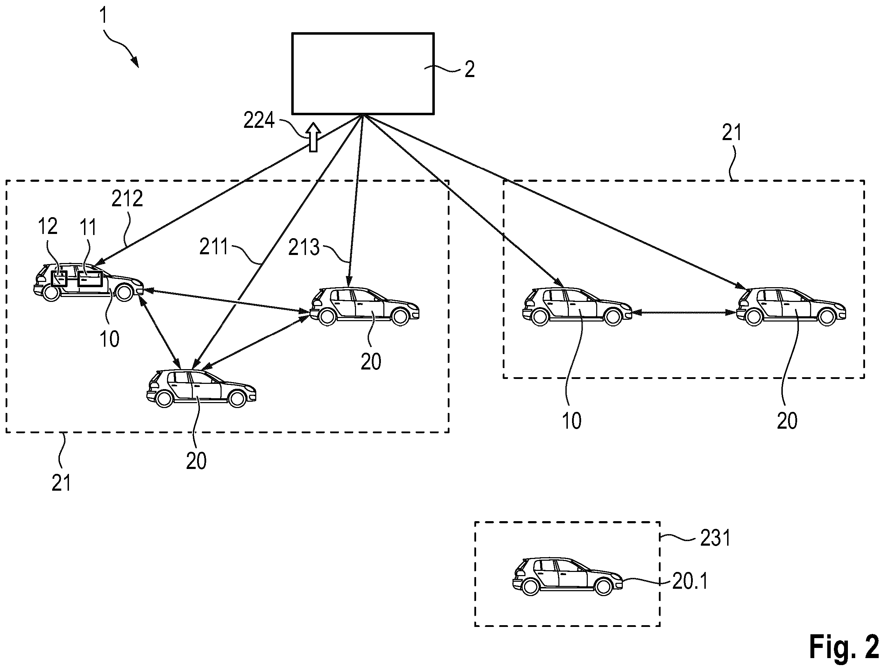

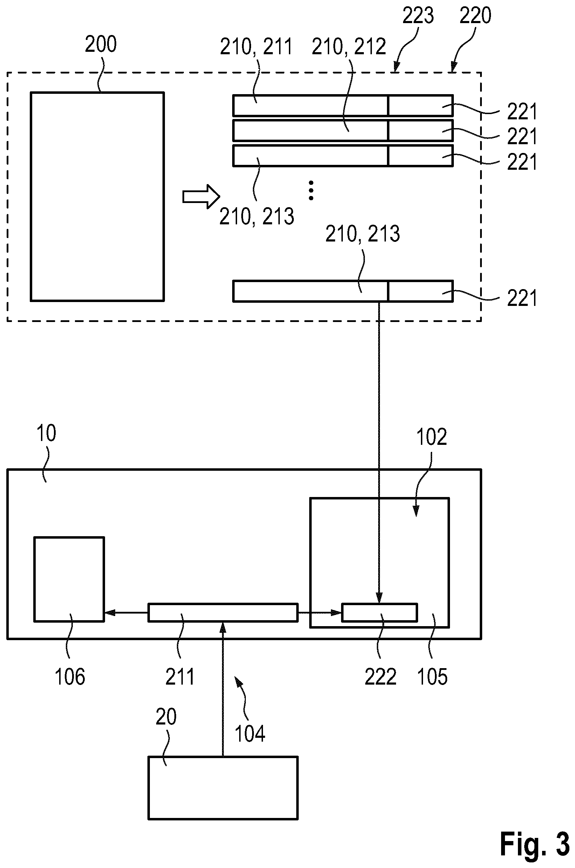

Figur 1 zeigt ein erfindungsgemäßes Verfahren 100 zum zumindest teilweisen Verarbeiten eines Datensatzes 200 mit mehreren Datensegmenten 210, wie in Figur 3 gezeigt, bei einem Empfängerfahrzeug 10. Bei dem Datensatz 200 kann es sich z. B. um einen Datensatz 200 zur Installation eines Softwareupdates des Empfängerfahrzeuges 10 handeln. In Figur 2 ist ein System 1 mit einer Datenquelle 2, mehreren Senderfahrzeugen 20 und dem Empfängerfahrzeug 10 dargestellt. Die Datenquelle 2 kann vorzugsweise einen Server umfassen. Dabei weist das Empfängerfahrzeug 10 zumindest eine Kommunikationseinheit 11 zur Kommunikation mit der Datenquelle 2 und zumindest dem Senderfahrzeug 20 auf. Die Kommunikationseinheit 11 kann mehrere Kommunikationselemente umfassen, wenn die Kommunikation mit der Datenquelle 2 und mit dem Senderfahrzeug 20 beispielsweise auf unterschiedlichen Kommunikationswegen und/oder durch unterschiedliche Kommunikationsstandards erfolgt. Weiterhin umfasst das Empfängerfahrzeug 10 eine Kontrolleinheit 12 zum Ausführen des Verfahrens 100. Beispielsweise kann ein Computerprogrammprodukt vorgesehen sein, das Befehle umfasst, die bei einer Ausführung durch die Kontrolleinheit 12 die Kontrolleinheit 12 veranlassen, das Verfahren 100 auszuführen.

Wie in Figur 3 dargestellt, ist der Datensatz 200 dabei in mehrere Datensegmente 210 unterteilt. Wie in Figur 2 gezeigt, sind die Senderfahrzeuge 20 und das Empfängerfahrzeug 10 ferner in mehrere Gruppierungen 21 gruppiert, um den Datensatz 200 möglichst effizient den Senderfahrzeugen 20 und dem Empfängerfahrzeug 10 zur Verfügung zu stellen. Insbesondere wird jedem der Senderfahrzeuge 20 und dem Empfängerfahrzeug 10 der gleichen Gruppierung 21 von der Datenquelle 2 eines der Datensegmente 210 übermittelt, so dass der Gruppierung 21 insgesamt der gesamte Datensatz 200 zur Verfügung steht. Durch einen Austausch der Datensegmente 210 untereinander erhalten die Senderfahrzeuge 20 und das Empfängerfahrzeug 10 die jeweils fehlenden Datensegmente 210. Zum Erhalten von Bereitstellungsdaten 223 kann durch das Empfängerfahrzeug 10 eine Positionsinformation 224 zum Bestimmen der Gruppierung 21 an die Datenquelle 2 gesendet werden. In Abhängigkeit von der Positionsinformation 224, und insbesondere von weiteren Positionsinformationen 224 der Senderfahrzeuge 20, kann die Datenquelle 2 die Gruppierung 21, vorzugsweise temporär oder dauerhaft, zusammenstellen.

Bei dem Verfahren 100 erfolgt zunächst ein Erkennen 101 zumindest eines fehlenden ersten Datensegmentes 211 des Datensatzes 200 durch das Empfängerfahrzeug 10. Das erste Datensegment 211 ist dabei insbesondere einem der Senderfahrzeuge 20 von der Datenquelle 2 übermittelt worden. Vorzugsweise ist jedem der Senderfahrzeuge 20 der Gruppierung 21 zumindest das erste Datensegment 211 und/oder ein weiteres Datensegment 213 des Datensatzes 200 zum Erhalt durch das Empfängerfahrzeug 10 zugordnet, um die Datensegmente 210 der Gruppierung 21 zu dem Datensatz 200 zusammenzuführen. Es kann vorgesehen sein, dass beim Erkennen 101 des fehlenden ersten Datensegmentes 211 die Bereitstellungsdaten 223 von der Datenquelle 2 erhalten werden. Die Bereitstellungsdaten 223 können die Unterteilung, d. h. insbesondere eine Information über die Unterteilung, des Datensatzes 200 in die mehreren Datensegmente 210 umfassen. Weiterhin umfassen die Bereitstellungsdaten 223 vorzugsweise die Gruppierung 21, d. h. insbesondere eine Information über die Gruppierung 21, zur Bereitstellung des Datensatzes 200.

Weiterhin umfasst das Verfahren 100 einen Erhalt 102 von Sicherheitsdaten 220 zumindest zu dem ersten Datensegment 211 des Datensatzes 200 durch das Empfängerfahrzeug 10 von einer Datenquelle 2. Die Sicherheitsdaten 220 können, wie in Figur 3 gezeigt, eine externe Sicherheitsinformation 221 über eine Zusammensetzung des ersten Datensegmentes 211 umfassen. Beispielsweise kann die externe Sicherheitsinformation 221 in Form eines Hash-Wertes durch die Datenquelle 2 generiert werden oder sein.

Ferner erfolgt ein Auffinden 103 zumindest eines Senderfahrzeugs 20 zur Bereitstellung des ersten Datensegmentes 211. Zum Auffinden 103 des Senderfahrzeugs 20 kann eine Zuordnung 225 des ersten Datensegmentes 211 zu dem das erste Datensegment 211 aufweisenden Senderfahrzeug 20 durch das Empfängerfahrzeug 10 von der Datenquelle 2 erhalten werden. Dadurch kann das Auffinden 103 des Senderfahrzeugs 20 von dem Empfängerfahrzeug 10 in Abhängigkeit von der Zuordnung 225 durchgeführt werden. Es kann vorgesehen sein, dass bei dem Verfahren 100 beim Auffinden 103 des Senderfahrzeugs 20 eine Vertrauensprüfung 230 des Senderfahrzeugs 20 in Abhängigkeit von den Sicherheitsdaten 220 und/oder von den Bereitstellungsdaten 223 erfolgt. Dadurch kann sichergestellt werden, dass es sich bei dem Senderfahrzeug 20 um ein Fahrzeug handelt, welches, insbesondere von der Datenquelle 2, als vertrauenswürdig und/oder nicht als kritisch eingestuft wird. Beispielsweise können die Bereitstellungsdaten 223 und/oder die Sicherheitsdaten 220 Ausschlussdaten 231 zur Identifikation von kritischen Senderfahrzeugen 20.1 umfassen. Die Vertrauensprüfung 230 kann dabei in Abhängigkeit von den Ausschlussdaten 231 erfolgen. Ist beispielsweise durch die Datenquelle 2 festgestellt worden, dass eines der Senderfahrzeuge 20 manipuliert wurde, z. B. indem mehrfach fehlerhafte Daten des Senderfahrzeugs 20 erkannt wurden, kann dieses, wie in Figur 2 gezeigt, als kritisches Senderfahrzeug 20.1 eingestuft, und insbesondere außerhalb der Gruppierungen 21 geführt, werden.

Insbesondere wenn das von dem Empfängerfahrzeug 10 aufgefundene Senderfahrzeug 20 die Vertrauensprüfung 230 besteht, kann ein Erhalt 104 des ersten Datensegmentes 211 durch das Empfängerfahrzeug 10 von dem Senderfahrzeug 20 erfolgen. Dazu kann das Empfängerfahrzeug 10 zur Kommunikation mit dem Senderfahrzeug 20 und/oder der Datenquelle 2 über eine drahtlose Netzwerkverbindung und/oder eine Mobilfunkverbindung ausgebildet sein. Vorzugsweise kann das Senderfahrzeug 20 dem Empfängerfahrzeug 10 das erste Datensegment 211 z. B. per WLAN-Verbindung und/oder per 5G-Verbindung übermitteln.

Daraufhin wird durch das Empfängerfahrzeug 10 ein Überprüfen 105 einer Freigabefähigkeit des ersten Datensegmentes 211 in Abhängigkeit von den Sicherheitsdaten 220 ausgeführt, wie in Figur 3 gezeigt. Dazu kann eine interne Sicherheitsinformation 222 über die Zusammensetzung des ersten Datensegmentes 211 durch das Empfängerfahrzeug 10 erzeugt und mit der externen Sicherheitsinformation 221 verglichen werden. Insbesondere, wenn es sich bei der externen und internen Sicherheitsinformation 221, 222 um Hash-Werte handelt, kann eine geringfügige Manipulation und/oder Fehlübermittlung des ersten Datensegmentes 211 beim Überprüfen 105 der Freigabefähigkeit aufgedeckt werden.

In Abhängigkeit von der Freigabefähigkeit erfolgt ferner ein Verarbeiten 106 des ersten Datensegmentes 211 durch das Empfängerfahrzeug 10. Insbesondere erfolgt das Verarbeiten 106 des ersten Datensegmentes 211 nur dann, wenn die interne und externe Sicherheitsinformation 222, 221 exakt übereinstimmen. Andernfalls kann das erste Datensegment 211 als unsicher klassifiziert und verworfen werden. Es kann vorgesehen sein, dass bei einer fehlerhaften Überprüfung der Freigabefähigkeit das Senderfahrzeug 20 als kritisches oder potentiell kritisches Senderfahrzeug 20 an die Datenquelle 2 gemeldet wird.

Beim Verarbeiten 106 des ersten Datensegmentes 211 können die mehreren, insbesondere alle, Datensegmente 210 des Datensatzes 200 zusammengesetzt werden. Anschließend kann der Datensatz 200 zur bestimmungsgemäßen Verwendung, z. B. zur Installation des Softwareupdates, genutzt werden. Vor dem Verarbeiten 106, vorzugsweise zum Erkennen 101 des fehlenden ersten Datensegmentes 211, kann ferner ein Erhalt eines zweiten Datensegmentes 212 des Datensatzes 200 von der Datenquelle 2 und/oder von einem weiteren Senderfahrzeug 20 der Gruppierung 21 vorgesehen sein, so dass das zweite Datensegment 212 beim Verarbeiten 106 des ersten Datensegmentes 211 mit dem ersten Datensegment 211 verarbeitet wird. Insbesondere können weitere Datensegmente 213 durch das Empfängerfahrzeug 10 von unterschiedlichen Senderfahrzeugen 20 der Gruppierung 21 erhalten werden. Ferner kann das erste Datensegment 211 und/oder das zweite Datensegment 212 durch das Empfängerfahrzeug 10 für das Senderfahrzeug 20 und/oder die Senderfahrzeuge 20 der Gruppierung 21 bereitgestellt werden, um den Austausch der mehreren Datensegmente 210 innerhalb der Gruppierung 21 zu fördern.

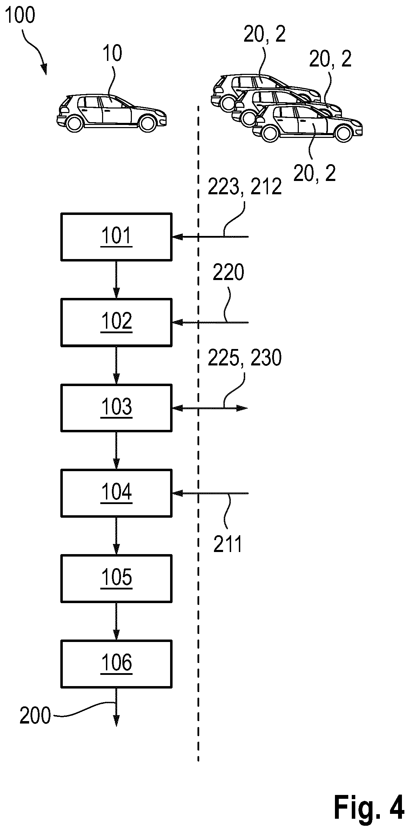

Figur 4 zeigt ferner ein erfindungsgemäßes Verfahren 100 zum zumindest teilweisen Verarbeiten 106 eines Datensatzes 200 mit mehreren Datensegmenten 210 bei einem Empfängerfahrzeug 10 in einem weiteren Ausführungsbeispiel. Dabei wird das Verfahren 100 im Wesentlichen gemäß dem ersten Ausführungsbeispiel ausgeführt. Allerdings werden die Sicherheitsdaten 220 von mehreren Datenquellen 2, beispielsweise in Form von dem Empfängerfahrzeug 10 begegnenden Senderfahrzeugen 20, empfangen. Anschließend werden die Sicherheitsdaten 220 von unterschiedlichen Datenquellen 2 zur Verifikation der Sicherheitsdaten 220 miteinander verglichen. Somit kann die Verifikation der Sicherheitsdaten 220 z. B. auf einer Distributed-Ledger-Technologie beruhen, um einen Ausfall eines Servers zu kompensieren und/oder eine crowd-basierte Sicherheitsverbesserung zu erzielen.

Dadurch, dass das Empfängerfahrzeug 10 die Sicherheitsdaten 220 von der zumindest einen Datenquelle 2 erhält, kann bei der Überprüfung der Freigabefähigkeit insbesondere erkannt werden, ob das erste Datensegment 211 manipuliert und/oder fehlerhaft ist. Somit kann das Senderfahrzeug 20 als Verteiler für das erste Datensegment 211 dienen, ohne die Sicherheit innerhalb der Gruppierung 21 zu beeinträchtigen. Durch die über die Gruppierung 21 verteilte Übermittlung des Datensatzes 200 kann die Datenquelle 2, insbesondere mittels einer vergleichsweise geringen Netzwerkkapazität, die Verbreitung des Datensatzes 200 auch bei großen Datenmengen und einer hohen Fahrzeugzahl effizient durchführen und/oder initiieren. Darüber hinaus kann auch bei einer unzureichenden Mobilfunkabdeckung noch ein Bezug des Datensatzes 200 durch das Empfängerfahrzeug 10 ermöglicht sein.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: System
- 2: Datenquelle

- 10: Empfängerfahrzeug
- 11: Kommunikationseinheit
- 12: Kontrolleinheit

- 20: Senderfahrzeug
- 20.1: kritisches Senderfahrzeug
- 21: Gruppierung

- 100: Verfahren
- 101: Erkennen von 211
- 102: Erhalt von 220
- 103: Auffinden von 20
- 104: Erhalt von 211
- 105: Überprüfen von 211
- 106: Verarbeiten von 211

- 200: Datensatz
- 210: mehrere Datensegmente
- 211: erstes Datensegment
- 212: zweites Datensegment
- 213: weiteres Datensegment

- 220: Sicherheitsdaten
- 221: externe Sicherheitsinformation
- 222: interne Sicherheitsinformation
- 223: Bereitstellungsdaten
- 224: Positionsinformation
- 225: Zuordnung von 211 zu 20

- 230: Vertrauensprüfung
- 231: Ausschlussdaten

## Patentansprüche

1. Verfahren (100) zum zumindest teilweisen Verarbeiten eines Datensatzes (200) mit mehreren Datensegmenten (210) bei einem Empfängerfahrzeug (10),
umfassend
- Erkennen (101) zumindest eines fehlenden ersten Datensegmentes (211) des Datensatzes (200) durch das Empfängerfahrzeug (10),
- Erhalt (102) von Sicherheitsdaten (220) zumindest zu dem ersten Datensegment (211) des Datensatzes (200) durch das Empfängerfahrzeug (10) von einer Datenquelle (2),
- Auffinden (103) zumindest eines Senderfahrzeugs (20) zur Bereitstellung des ersten Datensegmentes (211),
- Erhalt (104) des ersten Datensegmentes (211) durch das Empfängerfahrzeug (10) von dem Senderfahrzeug (20),
- Überprüfen (105) einer Freigabefähigkeit des ersten Datensegmentes (211) in Abhängigkeit von den Sicherheitsdaten (220),
- Verarbeiten (106) des ersten Datensegmentes (211) durch das Empfängerfahrzeug (10) in Abhängigkeit von der Freigabefähigkeit, wobei
- beim Auffinden (103) des Senderfahrzeugs (20) eine Vertrauensprüfung (230) des Senderfahrzeugs (20) in Abhängigkeit von den Sicherheitsdaten (220) und/oder von Bereitstellungsdaten (223) erfolgt.

2. Verfahren (100) nach Anspruch 1,
**dadurch gekennzeichnet,**
**dass** die Sicherheitsdaten (220) eine externe Sicherheitsinformation (221) über eine Zusammensetzung des ersten Datensegmentes (211) umfassen, wobei zum Überprüfen (105) der Freigabefähigkeit eine interne Sicherheitsinformation (222) über die Zusammensetzung des ersten Datensegmentes (211) erzeugt und mit der externen Sicherheitsinformation (221) verglichen wird.

3. Verfahren (100) nach Anspruch 1 oder 2,
**dadurch gekennzeichnet,**
**dass** beim Erkennen (101) des fehlenden ersten Datensegmentes (211) Bereitstellungsdaten (223) von der Datenquelle (2) erhalten werden, wobei die Bereitstellungsdaten (223) eine Unterteilung des Datensatzes (200) in die mehreren Datensegmente (210) umfassen.

4. Verfahren (100) nach einem der vorhergehenden Ansprüche,
**dadurch gekennzeichnet,**
**dass** von der Datenquelle (2) eine Zuordnung (225) des ersten Datensegmentes (211) zu dem Senderfahrzeug (20) erhalten wird, wobei das Auffinden (103) des Senderfahrzeugs (20) in Abhängigkeit von der Zuordnung (225) erfolgt.

5. Verfahren (100) nach Anspruch 3,
**dadurch gekennzeichnet,**
**dass** die Bereitstellungsdaten (223) eine Gruppierung (21) mehrerer Senderfahrzeuge (20) zur Bereitstellung des Datensatzes (200) umfassen, wobei jedem der Senderfahrzeuge (20) der Gruppierung (21) zumindest ein weiteres Datensegment (213) des Datensatzes (200) zum Erhalt durch das Empfängerfahrzeug (10) zugordnet ist, um die weiteren Datensegmente (213) der Gruppierung (21) zu dem Datensatz (200) zusammenzuführen.

6. Verfahren (100) nach Anspruch 3 oder 5,
**dadurch gekennzeichnet,**
**dass** zum Erhalt der Bereitstellungsdaten (223) eine Positionsinformation (224) zum Bestimmen der Gruppierung (21) an die Datenquelle (2) gesendet wird.

7. Verfahren (100) nach einem der vorhergehenden Ansprüche,
**dadurch gekennzeichnet,**
**dass** das Verfahren (100) einen Erhalt eines zweiten Datensegmentes (212) des Datensatzes (200) von der Datenquelle (2) umfasst, wobei das zweite Datensegment (212) mit dem ersten Datensegment (211) verarbeitet wird.

8. Verfahren (100) nach einem der vorhergehenden Ansprüche,
**dadurch gekennzeichnet,**
**dass** durch das Empfängerfahrzeug (10) das erste Datensegment (211) und/oder das zweite Datensegment (212) für das Senderfahrzeug (20) und/oder die Senderfahrzeuge (20) der Gruppierung (21) bereitgestellt wird.

9. Verfahren (100) nach einem der Ansprüche 3, 5 oder 6,
**dadurch gekennzeichnet,**
**dass** die Bereitstellungsdaten (223) und/oder die Sicherheitsdaten (220) Ausschlussdaten (231) zur Identifikation von kritischen Senderfahrzeugen (20.1) umfassen, wobei die Vertrauensprüfung (230) in Abhängigkeit von den Ausschlussdaten (231) erfolgt.

10. Verfahren (100) nach einem der vorhergehenden Ansprüche,
**dadurch gekennzeichnet,**
**dass** das Empfängerfahrzeug (10) zur Kommunikation mit dem Senderfahrzeug (20) und/oder der Datenquelle (2) über eine drahtlose Netzwerkverbindung und/oder eine Mobilfunkverbindung ausgebildet ist.

11. Verfahren (100) nach einem der vorhergehenden Ansprüche,
**dadurch gekennzeichnet,**
**dass** die Sicherheitsdaten (220) von mehreren Datenquellen (2) empfangen werden, wobei die Sicherheitsdaten (220) von unterschiedlichen Datenquellen (2) zur Verifikation der Sicherheitsdaten (220) miteinander verglichen werden.

12. Computerprogrammprodukt, umfassend Befehle, die bei einer Ausführung durch eine Kontrolleinheit (12) die Kontrolleinheit (12) veranlassen, ein Verfahren (100) nach einem der vorhergehenden Ansprüche auszuführen.

13. Empfängerfahrzeug (10) aufweisend
zumindest eine Kommunikationseinheit (11) zur Kommunikation mit einer Datenquelle (2) und zumindest einem Senderfahrzeug (20), und
eine Kontrolleinheit (12) zum Ausführen eines Verfahrens (100) nach einem der Ansprüche 1 bis 11.

14. System (1) aufweisend
eine Datenquelle (2),
ein Senderfahrzeug (20) und
ein Empfängerfahrzeug (10) nach dem vorhergehenden Anspruch.

## Claims

1. Method (100) for at least partially processing a data set (200) having a plurality of data segments (210) in a receiver vehicle (10),
comprising
- the receiver vehicle (10) detecting (101) at least one missing first data segment (211) of the data set (200),
- the receiver vehicle (10) obtaining (102) security data (220) at least relating to the first data segment (211) of the data set (200) from a data source (2),
- locating (103) at least one transmitter vehicle (20) for providing the first data segment (211),
- the receiver vehicle (10) obtaining (104) the first data segment (211) from the transmitter vehicle (20),
- checking (105) a releasability of the first data segment (211) on the basis of the security data (220),
- the receiver vehicle (10) processing (106) the first data segment (211) on the basis of the releasability, wherein
- during the step of locating (103) the transmitter vehicle (20), a trust check (230) is performed on the transmitter vehicle (20) on the basis of the security data (220) and/or of provision data (223).

2. Method (100) according to claim 1,
**characterized in that**
the security data (220) comprise external security information (221) about a composition of the first data segment (211), wherein, in order to check (105) the releasability, internal security information (222) about the composition of the first data segment (211) is generated and compared with the external security information (221).

3. Method (100) according to claim 1 or 2,
**characterized in that**
during the step of detecting (101) the missing first data segment (211), provision data (223) are obtained from the data source (2), wherein the provision data (223) comprise a subdivision of the data set (200) into the plurality of data segments (210).

4. Method (100) according to any of the preceding claims,
**characterized in that**
an assignment (225) of the first data segment (211) to the transmitter vehicle (20) is obtained from the data source (2), wherein the transmitter vehicle (20) is located (103) on the basis of the assignment (225).

5. Method (100) according to claim 3,
**characterized in that**
the provision data (223) comprise a grouping (21) of a plurality of transmitter vehicles (20) for providing the data set (200), wherein each of the transmitter vehicles (20) of the grouping (21) is assigned at least one further data segment (213) of the data set (200) for the receiver vehicle (10) to obtain, in order to combine the further data segments (213) of the grouping (21) to form the data set (200).

6. Method (100) according to claim 3 or 5,
**characterized in that**
in order to obtain the provision data (223), position information (224) for determining the grouping (21) is sent to the data source (2).

7. Method (100) according to any of the preceding claims,
**characterized in that**
the method (100) comprises obtaining a second data segment (212) of the data set (200) from the data source (2), wherein the second data segment (212) is processed along with the first data segment (211).

8. Method (100) according to any of the preceding claims,
**characterized in that**
the receiver vehicle (10) provides the first data segment (211) and/or the second data segment (212) to the transmitter vehicle (20) and/or the transmitter vehicles (20) of the grouping (21).

9. Method (100) according to any of claims 3, 5 and 6,
**characterized in that**
the provision data (223) and/or the security data (220) comprise exclusion data (231) for identifying critical transmitter vehicles (20.1), wherein the trust check (230) is performed on the basis of the exclusion data (231).

10. Method (100) according to any of the preceding claims,
**characterized in that**
the receiver vehicle (10) is designed to communicate with the transmitter vehicle (20) and/or the data source (2) via a wireless network connection and/or a mobile telephony connection.

11. Method (100) according to any of the preceding claims,
**characterized in that**
the security data (220) are received from a plurality of data sources (2), wherein the security data (220) from different data sources (2) are compared with each other in order to verify the security data (220).

12. Computer program product comprising instructions which, when executed by a control unit (12), cause the control unit (12) to execute a method (100) according to any of the preceding claims.

13. Receiver vehicle (10) having
at least one communication unit (11) for communicating with a data source (2) and with at least one transmitter vehicle (20), and
a control unit (12) for executing a method (100) according to any of claims 1 to 11.

14. System (1) having
a data source (2),
a transmitter vehicle (20) and
a receiver vehicle (10) according to the preceding claim.

## Revendications

1. Procédé (100) de traitement au moins partiel d'un ensemble de données (200) comportant plusieurs segments de données (210) au niveau d'un véhicule récepteur (10),
comprenant
- la reconnaissance (101) d'au moins un premier segment de données (211) manquant de l'ensemble de données (200) par le véhicule récepteur (10),
- l'obtention (102) de données de sécurité (220) au moins sur le premier segment de données (211) de l'ensemble de données (200) par le véhicule récepteur (10) à partir d'une source de données (2),
- la découverte (103) d'au moins un véhicule émetteur (20) pour mettre à disposition le premier segment de données (211),
- l'obtention (104) du premier segment de données (211) par le véhicule récepteur (10) à partir du véhicule émetteur (20),
- l'inspection (105) d'une capacité de validation du premier segment de données (211) en fonction des données de sécurité (220),
- le traitement (106) du premier segment de données (211) par le véhicule récepteur (10) en fonction de la capacité de libération, dans lequel
- lors de la découverte (103) du véhicule émetteur (20), un examen de confiance (230) du véhicule émetteur (20) est effectué en fonction des données de sécurité (220) et/ou de données de mise à disposition (223).

2. Procédé (100) selon la revendication 1,
**caractérisé en ce**
**que** les données de sécurité (220) comprennent une information de sécurité externe (221) sur une composition du premier segment de données (211), dans lequel une information de sécurité interne (222) sur la composition du premier segment de données (211) est générée pour inspecter (105) la capacité de libération et est comparée à l'information de sécurité externe (221).

3. Procédé (100) selon la revendication 1 ou 2,
**caractérisé en ce**
**que**, lors de la reconnaissance (101) du premier segment de données (211) manquant, des données de mise à disposition (223) sont obtenues de la source de données (2), dans lequel les données de mise à disposition (223) comprennent une subdivision de l'ensemble de données (200) dans les plusieurs segments de données (210).

4. Procédé (100) selon l'une des revendications précédentes,
**caractérisé en ce**
**qu**'une affectation (225) du premier segment de données (211) au véhicule émetteur (20) est obtenue par la source de données (2), dans lequel la découverte (103) du véhicule émetteur (20) est effectuée en fonction de l'affectation (225).

5. Procédé (100) selon la revendication 3,
**caractérisé en ce**
**que** les données de mise à disposition (223) comprennent un regroupement (21) de plusieurs véhicules émetteurs (20) pour la mise à disposition de l'ensemble de données (200), dans lequel au moins un autre segment de données (213) de l'ensemble de données (200) est associé à chacun des véhicules émetteurs (20) du regroupement (21) pour l'obtention par le véhicule récepteur (10), afin de réunir les autres segments de données (213) du regroupement (21) en l'ensemble de données (200).

6. Procédé (100) selon la revendication 3 ou 5,
**caractérisé en ce**
**que,** pour obtenir les données de mise à disposition (223), une information de position (224) est émise vers la source de données (2) pour déterminer le regroupement (21).

7. Procédé (100) selon l'une des revendications précédentes,
**caractérisé en ce**
**que** le procédé (100) comprend une obtention d'un second segment de données (212) de l'ensemble de données (200) de la source de données (2), dans lequel le second segment de données (212) est traité avec le premier segment de données (211).

8. Procédé (100) selon l'une des revendications précédentes,
**caractérisé en ce**
**que** le premier segment de données (211) et/ou le second segment de données (212) est mis à disposition par le véhicule récepteur (10) pour le véhicule émetteur (20) et/ou les véhicules émetteurs (20) du regroupement (21).

9. Procédé (100) selon l'une des revendications 3, 5 ou 6,
**caractérisé en ce**
**que** les données de mise à disposition (223) et/ou les données de sécurité (220) comprennent des données d'exclusion (231) pour l'identification de véhicules émetteurs critiques (20.1), dans lequel l'examen de confiance (230) est effectué en fonction des données d'exclusion (231).

10. Procédé (100) selon l'une des revendications précédentes,
**caractérisé en ce**
**que** le véhicule récepteur (10) est conçu pour communiquer avec le véhicule émetteur (20) et/ou la source de données (2) par l'intermédiaire d'une connexion de réseau sans fil et/ou d'une connexion de téléphonie mobile.

11. Procédé (100) selon l'une des revendications précédentes,
**caractérisé en ce**
**que** les données de sécurité (220) sont reçues de plusieurs sources de données (2), dans lequel les données de sécurité (220) de différentes sources de données (2) sont comparées entre elles pour la vérification des données de sécurité (220).

12. Produit programme d'ordinateur, comprenant des instructions qui, lorsqu'elles sont exécutées par une unité de contrôle (12), amènent l'unité de contrôle (12) à exécuter un procédé (100) selon l'une des revendications précédentes.

13. Véhicule récepteur (10) présentant
au moins une unité de communication (11) pour communiquer avec une source de données (2) et au moins un véhicule émetteur (20), et
une unité de contrôle (12) pour l'exécution d'un procédé (100) selon l'une des revendications 1 à 11.

14. Système (1), présentant
une source de données (2),
un véhicule émetteur (20), et
un véhicule récepteur (10) selon la revendication précédente.
